# EUROPEAN PATENT APPLICATION

(11) **EP 3 381 252 A1**
(43) Date of publication of application: **03.10.2018**
(21) Application number: 18159241.1
(22) Date of filing: 28.02.2018
(51) Int. Cl.: A01B 69/00

(54) **STEERING ASSISTANCE SYSTEM FOR AN AGRICULTURAL TRACTOR AND IMPLEMENT COMBINATION**

(30) Priority: 28.03.2017 GB 201704967
(71) Applicant: AGCO Feucht GmbH, 90537 Feucht (DE)
(72) Inventor: Wägner, Christian, 90537 Feucht (DE)
(74) Representative: AGCO Intellectual Property Department

(57) **Abstract**

A steering assistance system (100) comprises a combination of an agricultural tractor (10) and an attached implement (12). A laser (30) is mounted to the combination and is configured to beam a visual representation (32) of an extrapolated path of a working edge forward of the implement.

## Description

### FIELD OF INVENTION

The invention relates to agricultural tractors with attached implements. In particular the invention relates to the provision of steering assistance for a driver when operating in a field when a working edge of the implement is laterally spaced from the trodden track of the tractor.

### BACKGROUND

Tractor-mounted implements for use in agricultural field operations have a working width which varies from machine to machine. When working a field area a tractor and implement combination is driven along a working path which is typically chosen to avoid working areas multiple times whilst ensuring that the entire area is covered. Therefore, it is commonly desirable to align the working edge of the implement as close as is practically possible to the edge of a previously-worked area. Misalignment can result in either overlap or, generally considered worse, missed (unworked) areas.

Alignment of the implement is particularly difficult when there is a significant lateral offset between the working edge of the implement and the track of the tractor because the driver is unable to use the latter directly to judge the lateral position of the implement.

Visibility of the implement extremities is often obscured by pillars or the driver's cab or by wide fenders for example, especially in the case of rear-mounted implements. Even when the implement is fully visible from the cab, the driver is frequently turning around to check the alignment of the working edge of the attached implement with the edge of a previously-worked, or unharvested, area. This is uncomfortable for the driver and presents an ergonomic deficiency.

Various attempts to ease these problems are known. For instance, some implements are fitted with marking devices which leave a mark on, or in, the ground which provides steering assistance for a following pass. In one example, seed drills and planters are known to include a coulter arranged to leave a mark in the form of a groove in the soil at a predetermined distance outside of the working width. The predetermined distance is such that the driver, on a subsequent pass, can simply align one front wheel with the groove resulting in alignment of the implement working edge with the edge of the previously-worked area. Such marker systems are not so easily implemented on implements that do not disturb the soil, for example hay tools.

Automatic steering systems are also well known in which the steering of the tractor is controlled automatically to ensure alignment of the implement. In one example of such, the tractor is fitted with a GPS receiver and the steering is based upon a sensed position and path plan. In another example, the tractor or implement is fitted with a sensing device which detects the edge of an unharvested area or a previously-worked area, and the steering is controlled based upon the sensed edge. US-6,095,254 discloses a such a system.

Whilst relieving the driver of the burden to continuously ensure alignment of the implement, automatic steering systems are expensive and are not generally installed on smaller and/or low-spec tractors.

There remains a desire to provide a steering assistance system which is suitable for a wide range of implements and without the added cost of high-tech automatic steering systems.

### SUMMARY OF THE INVENTION

In accordance with an aspect of the invention there is provided a steering assistance system comprising a combination of an agricultural tractor and an attached implement having a working width which defines a working edge, and a laser mounted to the combination and being configured to project a visual representation of an extrapolated path of the working edge forward of the implement with respect to a working direction.

The visual representation serves as an optical extrapolation of the working width to assist the driver by showing where the working edge of the implement will pass if continuing on the current forward trajectory. The representation may be in the form of an illuminated line or area beamed by the laser.

The invention offers several benefits. Firstly, the projected representation allows the driver to align the implement without the need to frequently turn around thus making the working conditions more ergonomically friendly. Secondly, steering guidance is provided without the need for expensive automatic steering systems. Thirdly, the inventive system is suitable for non-ground working implements such as hay tools, sprayers and spreaders for example. In the invention's simplest form a laser can be simply mounted to the tractor or the implement and in a manner that can also be retrofitted.

The laser can be mounted to either the tractor or the implement.

The laser may be mounted so as to be adjustable either manually or remotely. When mounted to the tractor the laser may be automatically adjusted according to the working width and lateral offset of the attached implement.

In a first, simple, embodiment the laser is mounted to the implement. The laser may be fixed in position to project a beam forwardly of the implement with respect to a forward direction of travel, the beam corresponding to an extrapolated working edge of the implement. Two lasers may be provided to project respective working edges of the implement.

In a second embodiment the laser is mounted to the tractor by a mounting device which comprises a first portion fixed to the tractor, a second portion to which the laser is fixed, electrical actuation means configured to adjust a relative angular positon between the first and second portions, and an electronic control unit that is in communication with the electrical actuation means. The angular direction of the laser may be adjustable by user commands via a user input device or automatically in response to a signal that is representative of the working width and/or of a lateral displacement between the implement and the tractor.

The laser may be selectively powered in one of a night time mode and a daytime mode, wherein the laser is dimmed for the night time mode.

The invention lends itself well to many types of agricultural tractor/implement combinations. For example, the system may be implemented in conjunction with mowers, hay rakes, tedders, sprayers, tillage tools, or seeding equipment.

### BRIEF DESCRIPTION OF THE DRAWINGS

Further advantages of the invention will become apparent from reading the following description of specific embodiments of the invention with reference to the appended drawings in which:
Figure 1 is a schematic plan view of a tractor and mower combination having a steering assistance system in accordance with a first embodiment of the invention;
Figure 2 is a plan view of the tractor and mower combination of Figure 1 shown during operation in a field;
Figure 3 is a schematic plan view of a tractor and mower combination having a steering assistance system in accordance with a second embodiment of the invention and shown during operation in a field;
Figure 4 is a schematic side elevation of a laser mounted to a cab roof of the tractor shown in Figure 3; and,
Figure 5 is a block diagram showing constituent parts of a steering assistance system in accordance with an embodiment of the invention.

In the drawings like characters of reference indicate corresponding parts in the different figures and embodiments. Relative terms such as front, rear, longitudinal and transverse will be made with reference to the forward direction of travel of a tractor and implement combination.

### DETAILED DESCRIPTION OF SPECIFIC EMBODIMENTS OF THE INVENTION

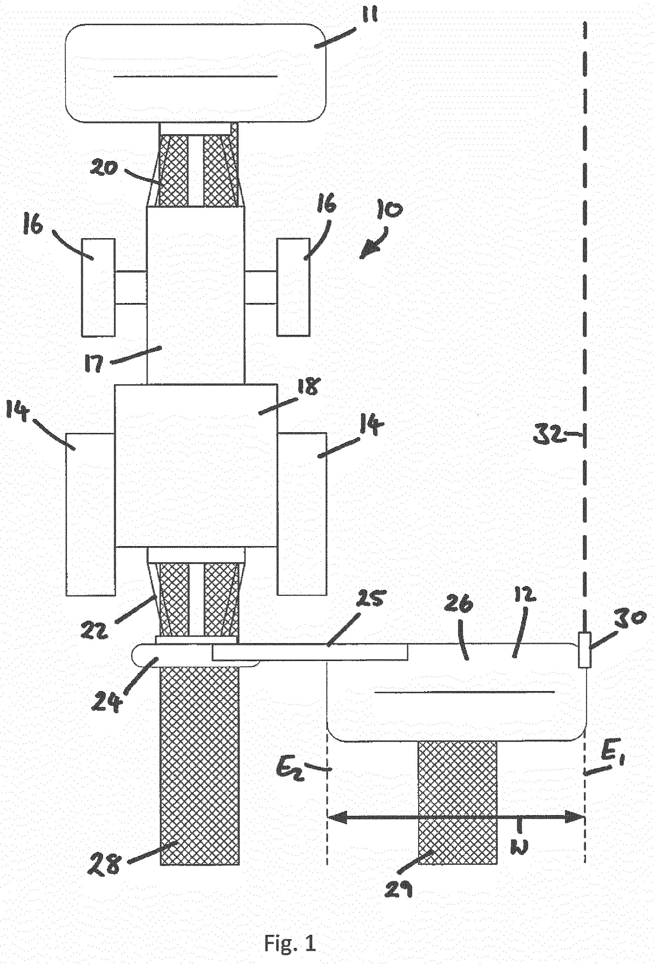

With reference to Figure 1, an agricultural tractor 10 has mounted thereto a front-mounted mower 11 and a rear-mounted mower 12. The tractor is of a convention construction comprising a pair of rear wheels 14, a pair of front steerable wheels 16, an engine compartment 17 and a drivers cab 18.

The front-mounted mower 11 is mounted to the front of the tractor 10 by a front 'three-point' linkage 20. The rear-mounted mower 12 is mounted to the rear of the tractor 10 by a rear 'three-point' linkage 22. The linkages 20,22 are controlled in a known manner to raise and lower the respective mowers 11,12 as required. The rear-mounted mower 12 includes a main frame 24 coupled to the rear linkage 22, a folding beam 25 and a mower body 26 which includes a covered disc or drum mower with rotating modules (not shown). The beam 25 is constructed in a known manner which permits the mower body 26 to fold upwardly around a longitudinal axis into a transport position (not shown) within the track width of the tractor 10.

When unfolded in an operating position as shown, the mower body 26 is offset to the right-hand side of the tractor 10 and has a working width w which, in this example, resides entirely outside of the tracked path of the tractor 10. However, it should be appreciated that this feature is not essential to the invention. In the configuration of Figure 1, the front and rear mowers 11, 12 are positioned in operation so that their respective working widths substantially align with minimal or little overlap.

Both mowers 11,12 are powered by the tractor 12 in a known manner and, in operation, are driven across fields of standing crop, the mowers 11,12 each cutting an area having a width 'w' and depositing a windrow or swath 28,29 on the ground. The working width w has an outer working edge E₁ and an inner working edge E₂.

It should be appreciated that the invention is applicable to a wide range of tractor-mounted implements and the description provided herein in relation to mowers is by way of example only. For example, the invention is applicable to other implements having a working width such as hay rakes, tedders, sprayers, tillage tools, rollers, harrows, and fertiliser spreaders.

Turning back to Figure 1, and in accordance with a first embodiment of the invention, a laser 30 is mounted on the outboard side of mower body 26 to project a visible beam or line 32 in front of the mower 12. The laser 30 is aligned so that the beam 32 is representative of an extrapolated path of the outer working edge E₁. The beam 32 serves to assist the driver with alignment of the working edge E₁ with a crop edge corresponding to an area of unharvested crop.

In this embodiment the laser is a line laser having a power of 50mW.

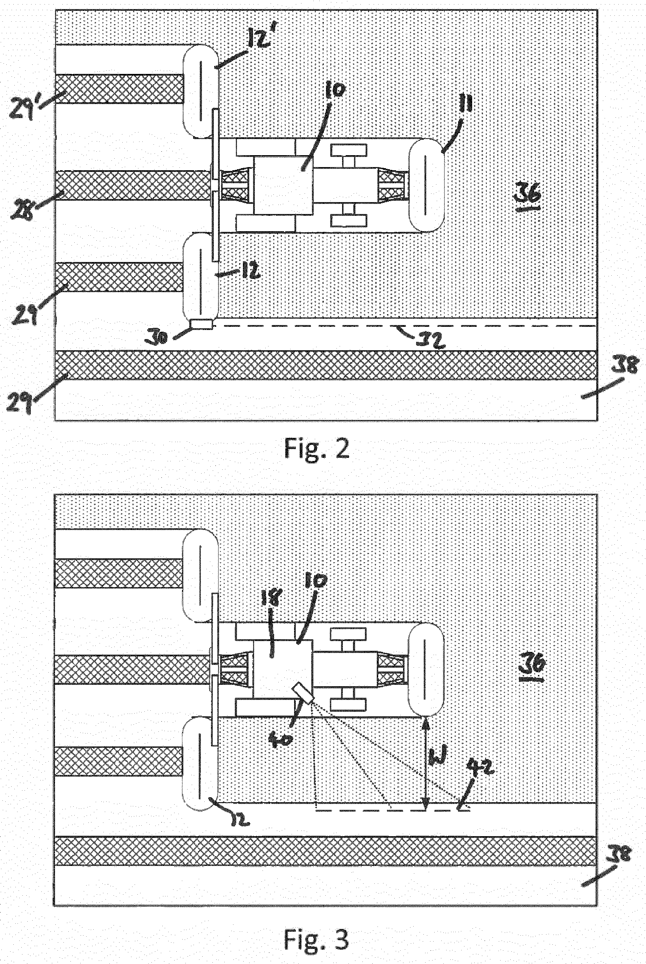

With reference to Figure 2, a tractor and mower combination comprises a pair of rear-mounted mowers 12,12', with the second mower 12' being offset to the left-hand side and providing, together with the front mower 11, what is commonly referred to as a butterfly configuration. This is shown only to illustrate an alternative mower configuration and is not essential to the invention.

The combination 10,11,12,12' is shown in a crop field having an unworked area 36 of standing crop, and a previously-worked, or harvested, area 38 having windrows 28,29 laying thereon. The laser 30 is angled to project a visible beam 32 that is longitudinally aligned with the outer working edge E₁ of mower 12. This assists the driver in aligning the mower 12 so that the working edge E₁ overlaps with the harvester area 38 only by a small distance. If the visible beam 32 is seen to overlay the unworked area 36 then this is indicative that the mower 12 is not aligned correctly and a strip of crop will be missed.

Although shown as comprising only one laser 30, it is envisaged that the steering assistance system may comprise more than one laser. For example, an extrapolated path of the outer working edge of the left-hand rear mower 12' may also be beamed by a further laser. In another embodiment, both the outer and inner working edge of the mower 12 may be represented by respective lasers.

With reference to Figure 3, a second embodiment of the invention involves a laser 40 mounted to the roof of tractor cab 18, the laser 40 serving to project a visible beam or line 42 in front of the mower 12 to assist the driver with steering. The laser 40 is angled to project a beam that corresponds to the outer working edge E₁ of rear-mounted mower 12.

In this embodiment the laser is a line laser having a power of 50mW.

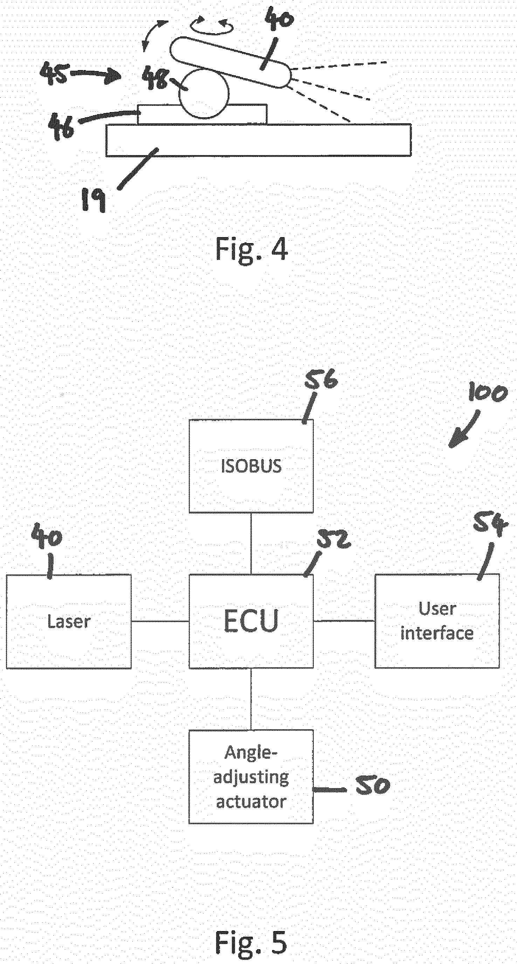

The laser 42 is mounted to the roof 19 of cab 18 by a mounting device 45 illustrated schematically in Figure 4. The device 45 comprises a base portion 46 secured to the roof 19, and a movable portion 48 attached to the base portion 46. The laser 40 is secured to top of movable portion 48.

The movable portion 48 and base portion may be connected by a ball and socket joint arrangement which allows the laser 40 to be angled in a vertical direction and in a side-to-side direction as indicated by the arrows in Figure 4. In a preferred arrangement, the relative movement between the base portion 46 and movable portion 48 is controlled by an angle-adjusting actuator 50. In one example, an arrangement similar to that employed for remote-operation automotive wing-mirrors may be adopted to control such angular adjustment of the laser 40.

Turning to Figure 5, the steering assistance system 100 may comprise an electronic control unit (ECU) 52 which is in communication with the angle-adjusting actuator 50 by a wired or wireless connection. The ECU is also connected to laser 40 to provide power to selectively illuminate the laser 40 when required.

A user-interface 54, for example in the form of a simple button, a console, or a touch-input terminal, is connected to ECU and is operable to receive user-commands from the driver.

The ECU 52 may also be in communication with an ISOBUS 56 which delivers data that is representative of the specific implement attached to the tractor 10. Such data may include the offset distance between the implement and tractor, and/or the working width of the implement.

The ECU 52 may be configured to adjust the angular position of the laser 40 in response to user commands communicated from the user interface device 54, therefore allowing manual adjustment of the position of the projected beam 42.

The ECU 52 may also be configured to adjust the angular position of the laser 40 automatically in response to a signal that is representative of the working width and/or of a lateral displacement between the implement 12 and the tractor 10 received from the ISOBUS 56.

The laser 40 may be selectively powered in one of a daytime mode and a night time mode, wherein the projected beam is brighter in the daytime mode to improve visibility when projected onto the ground surface.

It should be emphasized that the above-described embodiments of the present disclosure are merely possible examples of implementation, merely set forth for a clear understanding of the principles of the disclosure. Many variations and modifications may be made to the above-described embodiments of the disclosure without departing substantially from the spirit and principles of the disclosure.

## Claims

1. A steering assistance system (100) comprising a combination of an agricultural tractor (10) and an attached implement (12) having a working width which defines a working edge, and a laser (30;40) mounted to the combination, **characterised in that** the laser (30;40) is configured to project a visual representation (32) of an extrapolated path of the working edge forward of the implement with respect to a working direction.

2. A system according to Claim 1, wherein the laser (40) is mounted to the tractor (10).

3. A system according to Claim 2, wherein the laser (40) is mounted to the tractor (10) by a mounting device (45) which comprises a first portion (46) fixed to the tractor, a second portion (48) to which the laser (40) is fixed, electrical actuation means (50) configured to adjust a relative angular positon between the first and second portions (46,48), and an electronic control unit (52) that is in communication with the electrical actuation means (50).

4. A system according to Claim 3, further comprising a user interface device (54) in communication with the electronic control unit (52), wherein the electronic control unit is configured to adjust the angular position in response to operation of the user interface device (54).

5. A system according to Claim 3, wherein the electronic control unit (52) is configured to receive a first signal that is representative of the working width and/or of a lateral displacement between the implement and the tractor, and wherein the electronic control unit (52) is configured to adjust the angular position in response to the first signal.

6. A system according to any preceding claim, wherein the laser (40) is mounted to a cab roof (19) of the tractor.

7. A system according to Claim 1, wherein the laser (30) is mounted to the implement (12).

8. A system according to any preceding claim, comprising an electronic control unit (52) configured to selectively power the laser (30;40) in a daytime mode or a night-time mode, wherein the laser operates at a greater brightness in the daytime mode.
